# EUROPÄISCHE PATENTSCHRIFT

(11) **EP 1 090 746 B1**
(45) Veröffentlichungstag und Bekanntmachung des Hinweises auf die Patenterteilung: **11.01.2006**
(21) Anmeldenummer: 00810906.8
(22) Anmeldetag: 03.10.2000
(51) Int. Cl.: B32B 27/00, B32B 27/32, B32B 27/20

(54) **Mehrschichtige Kunstofffolie**
Multilayered plastic foil
Feuille multicouche plastique

(30) Priorität: 07.10.1999 CH 183599
(43) Veröffentlichungstag der Anmeldung: 11.04.2001
(73) Patentinhaber: ROBERT BOSCH GMBH, 70442 Stuttgart (DE)
(72) Erfinder: Nettesheim, Stefan, 8006 Zürich (CH)
(74) Vertreter: Clerc, Natalia

(56) Entgegenhaltungen:
- WO-A-97/02948
- PATENT ABSTRACTS OF JAPAN vol. 2000, no. 12, 3. Januar 2001 (2001-01-03) & JP 2000 238835 A (KEIHAN CELLOPHANE KK), 5. September 2000 (2000-09-05)
- PATENT ABSTRACTS OF JAPAN vol. 1999, no. 04, 30. April 1999 (1999-04-30) & JP 11 014979 A (SAMSUNG DISPLAY DEVICES CO LTD), 22. Januar 1999 (1999-01-22)

## Beschreibung

Die Verwendung mehrschichtiger Verbundfolien für die Verpackung verschiedener Füllgüter ist Stand der Technik. Verbundfolien bestehen üblicherweise aus mindestens einer Trägerfolie, die gegebenenfalls bedruckt sein kann und einer Heisssiegelschicht. Durch die schichtweise Kombination von Grundmaterialien mit unterschiedlichen Eigenschaften erhält man eine Verbundfolie mit einem Eigenschaftsprofil, das demjenigen einer aus einer Einzelschicht aufgebauten Folie (Monofolie) überlegen ist.

Für den allgemein üblichen Siegelprozess mit elektrisch beheizten Siegelbacken ist insbesondere die Kombination einer zuerst schmelzenden Schicht (Siegelschicht) mit einer mechanisch und thermisch stabilen Trägerschicht wichtig (US-A-5.811.185). Die Herstellung solcher Verbundfolien aus verschiedenartigen polymeren Werkstoffen ist allerdings aufwendig und teuer. Alternativ werden Hochfrequenz-, Induktions- und Lichtsiegelverfahren angewendet. In jedem dieser Fälle ist es nötig, dass ein Teil der elektromagnetischen Energie im Folienverbund absorbiert wird. Beim Hochfrequenzsiegeln wird dies erreicht, durch die Wahl von polymeren Werkstoffen mit ausreichend hohem dielektrischen Verlustfaktor (US-A-5.840.146). Analog sind elektrisch leitfähige Schichten für die Funktion des Induktionssiegelverfahrens verantwortlich (US-A-5.635.011). Verbundprofile mit metallischen oder zumindest elektrisch leitenden Schichten sind jedoch aufwendig in der Herstellung und nicht in allen Fällen erwünscht. Beim Lichtsiegelverfahren werden dem Folienvolumen Pigmente oder Farbstoffe zur Verstärkung der optischen Absorption zugeführt (DE-A-3.813.570). Das in dieser Schrift offenbarte Siegelverfahren und die verwendeten Folien eignen sich allerdings kaum für die Herstellung von Quersiegelnähten an Verpackungsschläuchen.

Der vorliegenden Erfindung liegt die Aufgabe zugrunde, eine mehrschichtige Kunststofffolie anzugeben, die eine effiziente Versiegelung ermöglicht und sich auch zum Herstellen von Quersiegelnähten eignet. Diese Aufgabe wird durch die Merkmalskombination der Ansprüche gelöst.

Durch den in den Ansprüchen 2 und 3 umschriebenen Schichtaufbau wird ein besonders effizientes Versiegeln von zwei Folien miteinander ermöglicht. Da nur die dünne Schicht von höchstens 2 x 10 µm erhitzt wird, ist die Aufheizung sehr rasch möglich. Weil dabei die beiden Trägerschichten kühl bleiben, sinkt während des Versiegelns die Zugfestigkeit nur geringfügig. Zudem wird eine effiziente Wärmeabfuhr in diesen Schichten nach dem Versiegeln erreicht, so dass die Siegelnaht sehr rasch verfestigt und die volle Festigkeit der Naht rasch erreicht ist. Es ergeben sich ausserordentlich kurze Siegelzeiten. Weil die Trägerschicht kühl bleibt, braucht sie nicht eine höhere Schmelztemperatur als die Siegelschicht zu haben und haftet trotzdem nicht an den Pressbacken oder Führungselementen, welche die Siegelnaht während der Versiegelung pressen. Daher kann die Verbundfolie kostengünstig aus ein und demselben Material hergestellt werden, wobei lediglich die Absorptionsschicht pigmentiert oder eingefärbt ist. Die Absorptionsschicht ist vorzugsweise zumindest 50% transparent, also der Absorptionsgrad höchstens 50%. Dadurch wird erreicht, dass bei zwei aufeinandergelegten Folien, deren Siegelschichten einander zugewandt sind, bei nur einseitiger Bestrahlung durch die Lichtquelle beide Siegelschichten gleichzeitig durch Lichtabsorption aufgeheizt werden. Wird ein Absorptionsgrad von weniger als 25% gewählt, können gleichzeitig zwei oder mehr aufeinanderliegende Folienpaare mit dem gleichen Lichtimpuls versiegelt werden. Dies ist zum Beispiel bei zwei Zwickelfalten oder umgefalteten Rändern von Vorteil. Die Folie eignet sich für beliebige Anordnungen von Siegelnähten, also zum Beispiel auch für Querversiegelungen von Verpackungsschläuchen. Es hat sich als relativ schwierig erwiesen, eine relativ dicke Trägerschicht mit einer sehr dünnen Absorptionsschicht oder Siegelschicht zu coextrudieren. Der Folienaufbau gemäss Anspruch 5 vermeidet diesen Nachteil durch Abstufung der Schichtdicken.

Nachfolgend wird ein Ausführungsbeispiel der Erfindung anhand der Zeichnung erläutert. Darin zeigt:
- Figuren 1 - 4: Querschnitte durch vier verschiedene Ausführungsformen,
- Figur 5: eine Draufsicht auf die Ausführungsform nach Figur 4, und
- Figur 6: die Lichtintensität und Temperaturverteilung bei der Versiegelung.

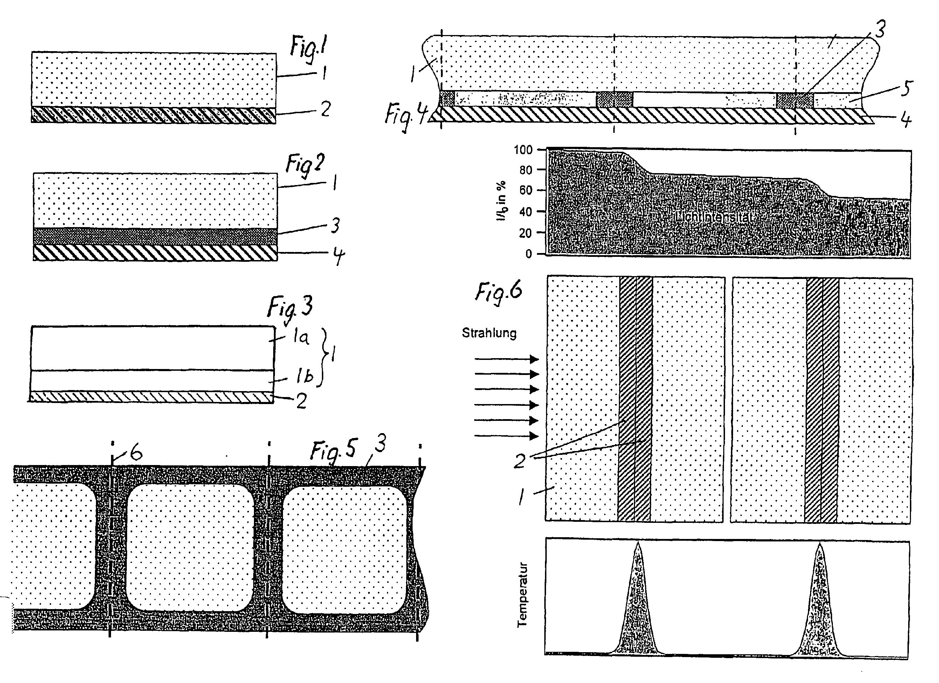

Die Ausführungsform nach Figur 1 besteht aus einer transparenten thermoplastischen Trägerschicht 1 und einer dünnen, lichtabsorbierenden, thermoplastischen Siegelschicht 2. Die lichtabsorbierenden Eigenschaften der Schicht 2 können zum Beispiel durch Pigmentieren oder Einfärben des Materials erreicht werden. Bei der Ausführungsform nach Figur 2 ist auf der der Trägerschicht 1 abgewandten Seite der Absorptionsschicht 3 eine separate thermoplastische Siegelschicht 4 angeordnet. Bei der Ausführungsform nach Figuren 4 und 5 ist die Absorptionsschicht 3 als Muster in einer Druckschicht 5 auf die Trägerschicht 1 aufgedruckt. 6 bezeichnet die Stellen von Quersiegelnähten.

Bei allen vier Beispielen ist die Dicke der Absorptions- und Siegelschicht 2 bzw. die Summe der Dicken der Absorptionsschicht 3 und der Siegelschicht 4 höchstens 10 µm. Vorzugsweise ist der Absorptionsgrad, das heisst die Abnahme der Lichtintensität beim Durchtritt des Lichtes durch die Schicht 2 oder 3 weniger als 50%, zum Beispiel zwischen 2% und 20%. Bei der Ausführungsform nach Figur 3 besteht die transparente Schicht 1 aus zwei Schichten 1a, 1b. Das Verhältnis der Dicken der Schichten 2, 1b, 1a ist etwa 1 : 2 : 4. Die transparente Schicht 1 ist also etwa sechsmal so dick wie die Absorptionsschicht 2. Durch diesen Aufbau wird die Coextrusion der Verbundfolie erleichtert. Die Schichten 1a, 1b können zum Beispiel aus transparentem Polyolefin und die Schicht 2 aus eingefärbtem oder pigmentiertem Polyolefin bestehen. Bei der Ausführungsform nach Figur 2 und 4 kann die Siegelschicht 4 zum Beispiel aus einem Heisssiegellack bestehen. Dieser ist vorzugsweise höchstens 6 µm dick.

Figur 6 stellt die Abnahme der Lichtintensität und die Temperaturverteilung beim Durchtritt des Lichtes durch zwei Paare von zu versiegelnden Folien gemäss Figur 1 dar. Die Absorption pro Schicht 2 beträgt etwa 10%, so dass in den Schichten 2 insgesamt etwa 40% des durchtretenden Lichtes absorbiert wird. Dieser geringe Absorptionsgrad ist zum Beispiel erwünscht, bei der Versiegelung von Zwickelfalten an Verpackungsmaschinen, wo gleichzeitig zwei Paare von Verbundfolien versiegelt werden. Es gibt jedoch auch Faltungen, bei denen gleichzeitig vier Paare von Folien versiegelt werden. Im Beispiel nach Figur 6 könnte zum Beispiel an der der Lichtquelle abgewandten Seite der Folien ein Spiegel angeordnet sein. Dadurch wird erreicht, dass trotz Abnahme der Strahlungsintensität beide Siegelnähte gleich belichtet, also aufgeheizt werden.

Überraschenderweise wurde gefunden, dass nicht die Gesamtenergie, die dem Verbund zugeführt wird, massgebend für die Festigkeit der Siegelnaht ist, sondern es besteht ein bisher nicht beachteter Zusammenhang zwischen der optimalen Dauer und Intensität der Beleuchtung mit elektromagnetischer Strahlung und der Ausführung der Absorptions- und Siegelschicht. Mit Strahlungsquellen hoher Intensität (> 10⁴ W/cm²) ist es möglich, kurzfristig einen scharfen Temperaturgradienten im Folienverbund zu erzeugen. Eine gepulste optische Siegeleinrichtung, wie sie in der CH-Anmeldung Nr. 161/99 beschrieben ist, ist hierfür besonders geeignet. Der Inhalt dieser Anmeldung wird zum integrierenden Bestandteil der vorliegenden Anmeldung erklärt. Während der kurzen Beleuchtungsdauer am Anfang des mechanischen Siegelprozesses bleibt die Wärmeenergie weitgehend in einer dünnen Schicht konzentriert. Anders als bei herkömmlichen Wärmesiegelverfahren erlaubt diese Konzentration der Wärmeenergie eine Trägerfolie zu verwenden, deren Schmelzverhalten demjenigen der Siegelschicht ähnlich ist, oder die sogar bereits bei tieferen Temperaturen schmilzt. Erfindungsgemäss gelingt dies dadurch, dass die Summe der Dicken der Absorptions- und Siegelschicht (< 10 µm) ist. Die Dicke der Trägerschichtfolie sollte mindestens doppelt so gross sein, wie diejenige der Absorptions- und Siegelschicht zusammen. Dadurch wird die erforderliche Lichtenergie, die in Wärme umgewandelt werden muss, deutlich verringert. Daher kann die mittlere Ausgangsleistung der Lichtquelle reduziert werden und der totale Absorptionsgrad der Verbundfolie gegenüber einer volumenpigmentierten Folie stark reduziert werden. Da die Trägerschicht weitgehend kalt bleibt und nicht plastifiziert wird, bleibt die Folie zugstabil und neigt nicht zum Verkleben mit mechanischen Führungs- oder Presselementen der Verarbeitungsmaschine. Die lichtabsorbierende Schicht kann auch so ausgebildet werden, dass sie nur im ultravioletten und/oder infraroten Bereich des Spektrums Licht absorbiert. Im sichtbaren Bereich ist daher eine solche Folie transparent.

## Patentansprüche

1. Mehrschichtige durch lichtabsorption verschweissbare Kunststofffolie zum Verpacken von Gütern, umfassend eine mindestens teilweise transparente Trägerschicht (1) und eine auf der einen Seite der Trägerschicht (1) aufgebrachte, lichtabsorbierende Absorptionsschicht (2, 3), deren Dicke höchstens 10 µm beträgt.

2. Folie nach Anspruch 1, wobei die Absorptionsschicht (2)aus thermoplastischem Kunststoff besteht.

3. Folie nach Anspruch 1, wobei auf der der Trägerschicht (1) abgewandten Seite der Absorptionsschicht (3) eine thermoplastische Siegelschicht (4) aufgebracht ist und die Summe der Dikke der Absorptionsschicht (3) und der Siegelschicht (4) höchstens 10 µm beträgt.

4. Folie nach einem der Ansprüche 1-3, wobei die Absorptionsschicht (2, 3) einen Absorptionsgrad zwischen 2% und 40% aufweist.

5. Folie nach Anspruch 2, wobei sie im Coextrusionsverfahren hergestellt ist und folgenden Schichtaufbau hat: Eine erste transparente Schicht, eine zweite transparente Schicht und eine eingefärbte oder pigmentierte Absorptionsschicht, wobei die Dikken-Verhältnisse der drei Schichten etwa 4 : 2 : 1 betragen, und wobei vorzugsweise alle drei Schichten aus dem gleichen Grundmaterial, vorzugsweise aus Polyolefin bestehen.

6. Folie nach Anspruch 3, wobei die Trägerschicht (1) innenseitig mit der Absorptionsschicht (3) bedruckt ist und auf die Absorptionsschicht (3) ein Heisssiegellack als Siegelschicht (4) mit einer Dicke unter 6 µm aufgetragen ist.

7. Folie nach Anspruch 6, wobei die Absorptionsschicht (3) nur auf Teilen der Fläche der Trägerschicht (1) aufgedruckt ist.

8. Folie nach einem der Ansprüche 1-7, wobei die Absorptionsschicht (2, 3) im UV-Bereich und/oder im IR-Bereich des optischen Spektrums lichtabsorbierend und im sichtbaren Bereich des Spektrums transparent ist.

9. Folie nach einem der Ansprüche 1-7, wobei die Absorptionsschicht (2, 3) ein Pigment enthält, das unter Wärmeeinwirkung photochemisch ausbleicht und transparent wird.

10. Verwendung einer Folie nach einem der Ansprüche 1-9 in einem Siegelprozess, der mittels einer Siegeleinrichtung mit einer optischen Energiequelle, die gepulste Lichtenergie hoher Intensität abgibt, ausgeführt wird.

## Claims

1. A multilayer synthetic film weldable by light absorption for packaging goods comprising an at least partially transparent carrier layer (1) and a light-absorbing absorption layer (2, 3) applied to one face of said carrier layer (1) and having a maximum thickness of 10 micron.

2. The film according to claim 1, wherein said absorption layer (2) is a thermoplastic material.

3. The film according to claim 1, wherein a thermoplastic sealing layer (4) is applied to the face of the absorption layer (3) opposite to said carrier layer (1) and the combined thickness of said absorption layer (3) and said sealing layer (4) being maximum 10 micron.

4. The film according to any one of claims 1 to 3, wherein said absorption layer (2, 3) has a degree of absorption between 2% and 40%.

5. The film according to claim 2, produced according to a coextrusion method and comprising the following layer arrangement: a first transparent layer, a second transparent layer and a coloured or pigmented absorption layer, wherein the thickness ratios of said three layers are approximately 4:2:1 and wherein preferably said three layers are of the same material, wherein said material is preferably polyolefin.

6. The film according to claim 3, wherein said absorption layer (3) is printed inside on said carrier layer (1) and further wherein said sealing layer (4) is a heat-sealable lacquer layer (3) having a thickness of less than 6 micron.

7. The film according to claim 6, wherein said absorption layer (3) is printed only on parts of said surface of the carrier layer (1).

8. The film according to any one of claims 1 to 7, wherein said absorption layer (2, 3) is light-absorbing in one of the ultraviolet range and/or the infrared range of the optical spectrum and is transparent in the visible range of the optical spectrum.

9. The film according to any one of claims 1 to 7, wherein said absorption layer (2, 3) contains a pigment, which is photochemically bleached and becomes transparent under the effect of heat.

10. Use of a film according to any one of claims 1 to 9 within a sealing method, performed by means of a sealing arrangement with an optical energy source, emitting a pulsed light energy of high intensity.

## Revendications

1. Film multicouche en matière synthétique apte à être soudé par absorption de lumière et destiné à emballer des marchandises, qui présente une couche de support au moins partiellement transparente (1) et sur l'un des côtés de cette couche de support (1) une couche d'absorption (2, 3) qui absorbe la lumière et dont l'épaisseur est de 10 µm au maximum.

2. Film selon la revendication 1, dont la couche d'absorption (2) est en matière synthétique thermoplastique.

3. Film selon la revendication 1, dans lequel une couche thermoplastique de scellement (4) est apportée sur le côté de la couche d'absorption (3) qui n'est pas orienté vers la couche de support (1) et dans lequel la somme des épaisseurs de la couche d'absorption (3) et de la couche de scellage (4) est de 10 µm au maximum.

4. Film selon l'une des revendications 1 à 3, dans lequel le taux d'absorption de la couche d'absorption (2, 3) est compris entre 2 % et 40 %.

5. Film selon la revendication 2 fabriqué par coextrusion et constitué d'une première couche transparente, d'une deuxième couche transparente et d'une couche colorée ou pigmentée d'absorption, les proportions entre les épaisseurs des trois couches étant sensiblement de 4:2:1 et les couches étant de préférence toutes les trois réalisées dans le même matériau de base et de préférence en polyoléfine.

6. Film selon la revendication 3, dont la couche d'absorption (3) est imprimée sur le côté intérieur de la couche de support (1) et dans lequel une cire à cacheter à chaud est apportée sur la couche d'absorption (3) pour former une couche de scellement (4) épaisse de moins de 6 µm.

7. Film selon la revendication 6, dont la couche d'absorption (3) n'est imprimée que sur des parties de la surface de la couche de support (1).

8. Film selon l'une des revendications 1 à 7, dont la couche d'absorption (2, 3) absorbe la lumière dans les domaines UV et/ou IR du spectre de la lumière et est transparente dans la plage visible du spectre.

9. Film selon l'une des revendications 1 à 7, dont la couche d'absorption (2, 3) contient un pigment qui, sous l'action de la chaleur, se décolore et devient transparent par photochimie.

10. Utilisation d'un film selon l'une des revendications 1 à 9 lors d'un scellement exécuté au moyen d'un dispositif de scellement doté d'une source d'énergie lumineuse qui délivre de l'énergie lumineuse pulsée à haute intensité.
